**Europäisches Patentamt**

**European Patent Office**

**Office européen des brevets**

(19)

(11) Publication number: **0 024 663**
**B1**

(12) **EUROPEAN PATENT SPECIFICATION**

(45) Date of publication of patent specification: **17.04.85**

(51) Int. Cl.⁴: **G 06 F 13/00**

(21) Application number: **80104872.9**

(22) Date of filing: **16.08.80**

(54) Data processing system having modular bus structure and expandable configuration.

(30) Priority: **30.08.79 IT 2535679**

(43) Date of publication of application:
**11.03.81 Bulletin 81/10**

(45) Publication of the grant of the patent:
**17.04.85 Bulletin 85/16**

(84) Designated Contracting States:
**DE FR GB**

(56) References cited:
**US-A-3 800 287**
**US-A-3 832 692**

**ELEKTRONIK, vol. 28, no. 15, 1979, July München, DE HILLERS et al. "Erweiterung eines Mikrocomputersystems um zusätzliche E/A-Leitungen", pages 66-69**

(73) Proprietor: **HONEYWELL INFORMATION SYSTEMS ITALIA S.p.A.**
**Via Martiri d'Italia 10**
**I-10014 Caluso (Torino) (IT)**

(72) Inventor: **Chimienti, Domenico**
**Via Lazzaretto 5**
**Vanzago (Milano) (IT)**
Inventor: **Vercesi, Arturo**
**Via Virgilio 64**
**R H O (Milano) (IT)**

(56) References cited:
**IBM TECHNICAL DISCLOSURE BULLETIN, vol. 22, no. 12, May 1980, New York, US STRIETELMEIER. "Arbitration array for device connection to I/o channels", pages 5237-5238 COMPUTER DESIGN, vol. 17, no. 9, September 1978, Concord, US JASWA "Designing interrupt structures for multiprocessor systems", pages 101-110**

## Description

The present invention relates to the architecture of data processing systems which make use of microprocessors intercommunicating by means of a common system channel or BUS. More particularly it relates to the circuits and the priority mechanism, through which the conflicts in the common use of the BUS among the several microprocessors of the system are solved.

It is known that large scale integration (LSI) components are more and more used in the computers and data processing systems realization. Such components perform by themselves the most of the required logical and circuital functions, and allow to obtain the desired system product with the addition of few electrical and/or functional components. Such integrated components widely perform, as the case may be, the function of central units or the one of interface control units for connection of peripheral devices.

An example of such integrated components or microprocessors, which the present description specifically refers to, is given by the Z-80 microprocessors family of the U.S. firm ZILOG.

Such family includes, for example, a microprocessor, with identification code Z-80 CPU, which performs the specific function of central and control unit in a data processing system and a microprocessor, with identification code Z-80 PIO, which performs the interface functions of two parallel interface input/output channels, in order to connect to the system peripheral units such as punching machines, printers, keyboards and so on.

Another exemplary microprocessor of the family, with identification code Z-80 SIO, performs the function of interface having serial input/output channel in order to connect to the system transmission lines and peripheral units with serial interface such as disk units, tape cassette units and so on.

These input/output microprocessors such as Z-80 PIO and Z-80 SIO are usually named "peripheral devices" and, for the following, the abbreviated expression "device" will be used for their identification.

A simple system built up with such family components may include, for example, a Z-80 CPU with function of central unit, an oscillator for the generation of timing signals, a power supply for the generation of a +5V regulated voltage supply, a read only memory for containing the microprograms required to lead the operation of the system and a peripheral Z-80 PIO (or SIO) coupled to an input/output peripheral unit such as a keyboard/printer set.

More complex systems may include, in addition to the read only memory, one or more read/write working memories for data and programs storing, and a plurality of devices such as Z-80 PIO (or SIO), each one connected to the common system bus.

This kind of architecture makes possible the assembling of flexible systems, based on modular elements which can be added or removed according to the needs to obtain the most suitable configurations for the required functions.

For example a system can be materially built up as a chassis or rack where a number N of printed circuit boards can be housed.

The rack rear is provided with a plurality N of connector sockets for printed circuit boards.

The corresponding contact elements of each connector socket are all connected together by electrical connection lines, obtained by means of the "wire wrap" technology or preferably by means of conductive leads formed on printed circuit board. This board is usually named "back panel".

These parallel connection leads materially form the system bus. A printed circuit board can include the microprocessor Z-80 CPU, the oscillator and other possible circuits, suitable for the microprocessor operation.

A second board can include a control ROS memory.

One or several additional board can include a read/write working memory and further boards can include one or several devices each.

In a structure like this it is possible to reconfigure the system by adding or taking away boards within the capacity N of the rack to house such boards, satisfying in this way, with a single product, the needs of several users or the different needs of the same user. Unfortunately a system reshaping and expansion which can be obtained by the simple adding or changing of plates has some limitations at the present status of art.

These limitations are substantially imposed by the conflict resolution mechanism in the access to common bus, the conflicts being due to the presence of several devices, which, through interruption requests, can compete for requesting access to the BUS and for calling the CPU central unit to satisfy their request.

In the circuital realization generally adopted, each device can send an interrupt request signal to the CPU central unit through a lead specifically assigned to each device.

The plurality of such leads, one for each device, is connected to the input of a network which detects interruptions and selects one of them on a priority basis.

Such a network acts as an intermediary between the several "devices" and the central unit CPU presenting to the central unit only one interruption at a time and selecting in the following dialogue the interested device.

The selection operation generally requires a group of leads, each one of which is "dedicated" to a device, that is it connects the selection network to a device.

It is clear that, with such form of embodiment, in order to have a system which can be reshaped, it is required to prearrange, since the beginning, a recognition and selection network suitable for the maximum number of devices that the system architecture is allowed to contain, and therefore a great waste of components is generally involved.

Besides, the use of an high number of interconnection leads, equal to twice the maximum number of devices that the system may contain, is required.

To avoid these inconvenients, according to the last circuital realizations, allowed by the mentioned family of microprocessors (Z-80-ZILOG), one interruption lead is used, on which all the devices can send an interruption request signal.

Besides, in order to settle the conflicts and execute a selection on a priority base, each device is furnished with an internal masking mechanism which allows to inhibit or mask the interruption request generation by each device if such device detects the presence of more priority interruptions.

The priority of each device is determined by its position in an inhibition chain.

Each device has an interruption enabling input (IEI) and an interruption enabling output (IEO).

By coupling the output IEO of each device with the input IEI of another device, a chain is formed in which a orderly priority is awarded to the several devices.

The identification of the interrupting device occurs through the sending on the BUS lead of an "interrupt vector" which supplied directly or indirectly the identity of the interrupting device. The selection of the interrupting device can also be made through the sending on the BUS leads of an address vector identified through a decoder by the interested device only.

With such form of embodiment it is possible to extend and reshape a system in a conceptually unlimited way, without need to prearrange a plurality of interruption handling leads and a suitable priority network nevertheless the interruption masking mechanism requires the transfer of a signal in the chain of devices with a propagation time from device to device in the order of 200 nsec and strictly limits the number of devices which can be effectively connected to the BUS.

To overcome such disadvantage, US—A—3800287 discloses an interruption propagation network by which a device rather than looking back at the immediately preceding device, looks back at the two immediately preceding devices.

By this arrangement the time required to an interruption masking signal to propagate along the chain of devices is substantially halved. However the number of interconnection leads and device pins required for interconnecting the devices increase by 100% and 50% respectively. This approach is further stressed in US—A—3832692 where the look back network allows a device to look back at N preceding devices in closer proximity so that the propagation time of the masking signal is substantially divided by N.

This result is achieved with the trade off of a further increase in the number of interconnection leads and device pins required.

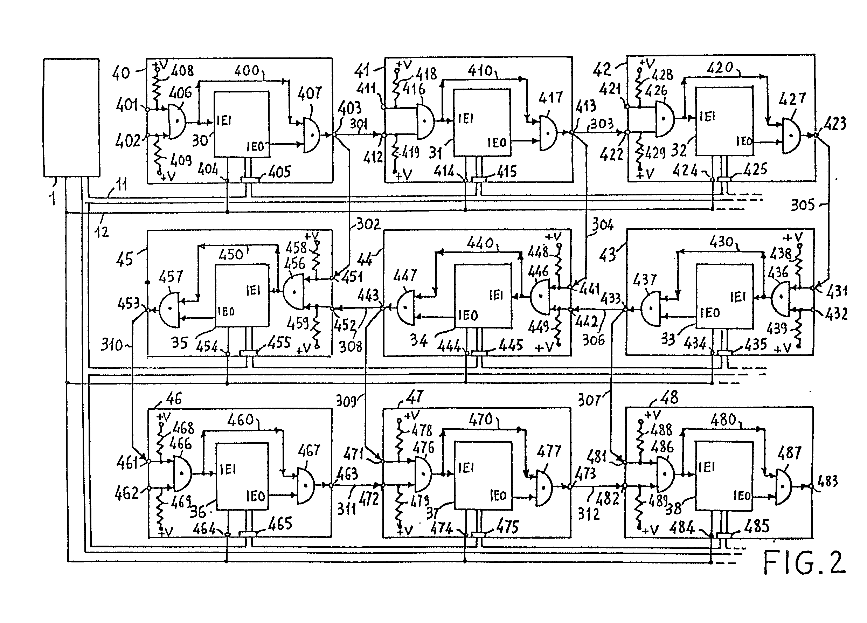

In the article "Erweiterung eines Mikrocomputersystems um zusätzliche E/A Leitungen" pages 66 to 69 of "Electronik" Vol. 28 N. 15 (1979.07) it is disclosed in Fig. 2 that a device can look back, rather than to the N immediately preceding device to some preceding devices, not necessarily in priority order.

Further it shows that in the case that modularity is not a constraint, it is possible to look back to a different number of devices.

By this arrangement the propagation time may be further reduced with a lesser increase in the number of interconnection leads and device pins, which however is still noticeable, especially in case there is a relevant number of devices in the system.

Such inconvenients are further overcome by the data processing system with BUS modular architecture according to the present invention which offers more and more advantage in terms of propagation speed and reduction in interconnection, the more devices are possibly present in the system.

In the system an interruption masking network is used, which is identical on each printed circuit plate and provides an intrinsically very fast bypass for the interruption signal without requiring a relevant increase in the number of interconnection leads and device pins. This is obtained by adopting a matrix like connection network as opposed to the cascade connection with or without look back feature and skip feature of the previous examples.

In this way the number of devices which can be connected to the BUS is increased in a practically unlimited way, without causing unacceptable operation delays or constructing complications.

In addition the need of any specialization of the back-panel is excluded.

Moreover, the data processing system according to the present invention allows for the assembly of several devices on the same plate, still maintaining a good flexibility in the assignment of the relative priorities among the several devices.

These and other features will appear more clearly from the following description of a preferred embodiment of the invention and from the attached drawings wherein:

Figure 1 shows in block diagram the architecture of a system, known in the prior art, which uses a chain interrupting mechanism.

Figure 2 shows in block diagram a preferred embodiment of the invention.

Figure 3 represents, in perspective view, the mechanical structure according to which the preferred embodiment of the invention shown in figure 2 is suitably formed.

Figure 4 shows a modification of the preferred embodiment of the invention shown in figure 2.

Figure 5 shows the connection back panel for the embodiment modification of figure 4.

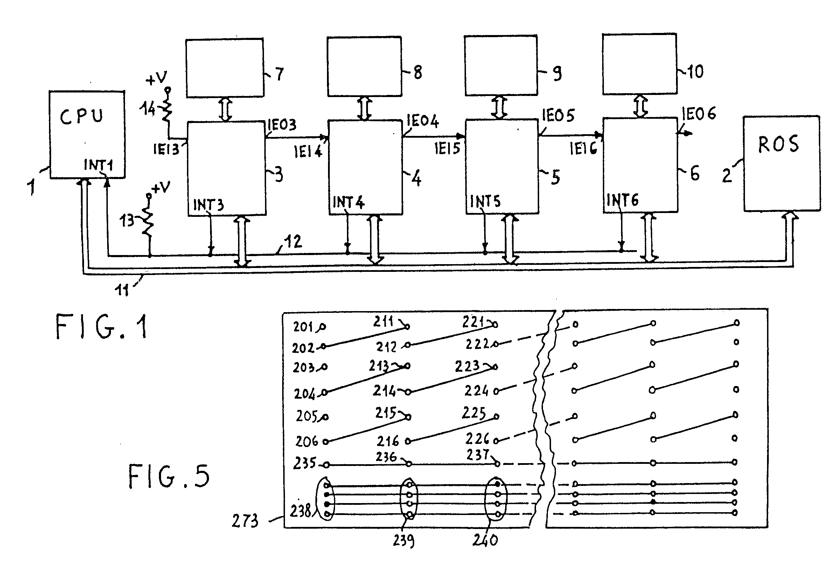

Figure 1 represents, in block diagram, a system architecture known in the art, which uses a chain interrupting mechanism.

The constructive details of the data processing system, the operation carried out and the dialogues developed on the common bus are not given, being completely irrelevant for the understanding of the present invention.

For such details reference is made to the manufacturers' technical data sheets.

In figure 1 the system includes a central unit, or CPU 1, a microprogram memory or ROS 2 and a certain number of devices 3, 4, 5, 6, each one connected to the one or to a group of peripheral units 7, 8, 9, 10.

CPU, devices 3 ... 6 and ROS memory are coupled to a common information transfer channel or BUS 11.

Such channel is formed by a certain number of leads for the transfer of data, commands, signals, addresses.

The access to the BUS is managed and controlled by the CPU 1, which can issue commands or authorization signals to the several devices memory included, to use the BUS leads and to apply thereon electrical signals representative of information.

While the memory is a passive element, the devices can ask, through an interruption, to access the BUS 11 on their own initiative as a consequence of the rising of particular events or status inside them or inside the peripheral units to which they are connected.

All the devices are provided with an output, respectively INT 3, INT 4, INT 5, connected to a common lead 12, which in turn is connected to an input INT 1 of CPU 1 and is normally maintained at a positive electrical level by a pull-up resistor 13, connected to a +V voltage source.

When a device wants to send an interruption to CPU, it grounds its output INT and the electrical level on lead 12 falls to 0. Such electrical level variation is detected by the CPU at suitable times through input INT 1 and, after a certain time interval, the CPU sends on BUS 11 (or better on some BUS leads) some answer signals with the meaning of interruption acceptance.

For example in the ZILOG microprocessor family already cited this information is provided by the contemporaneous presence of two signals on two leads named M1 and IORQ, which are part of the BUS. It is evident that in such kind of architecture several devices can concurrently ground their output INT 1 and the CPU is unable to recognize this circumstance.

Besides, it is evident that an interruption acceptance sent on the BUS must be identified by only a device at a time.

For such purpose each device is provided with an internal interruptivn logic, with an input terminal IEI3, IEI4, IEI5, IEI6 respectively and with an output terminal IEO3, IEO4, IEO5, IEO6, respectively. Each device can effectively forward an interruption (that is to lower to 0 the level of lead 12) only if a positive electrical signal (or logical level 1) is present on its input IEI.

Otherwise the sending of interruptions is inhibited. If the interrupt signal has been already forwarded, but the input IEI falls to 0, the interrupt signal is masked, that is the output INT is disconnected from ground.

Besides that, each device normally keeps its output IEO at positive electrical level (or logical level 1) and lowers it to electrical/logical level 0 when it produces an interruption or when its input IEI is lowered to 0.

Further each device is able to identify an interruption accepting signal only if it has sent an interruption and this is not masked. It is therefore clear that, by connecting the output IEO3 to input IEO4, the output IEO5 to input IEI6 a chain is formed which assigns to the several devices a prearranged priority.

Obviously the input IEI3 of the first devices of the chain will permanently be held at a positive level, for instance by means of a connection with a voltage source +V through a resistor 14. So, if the first device 3 produces an interruption signal, its output IEO3 falls to 0 and the same occurs in the chain of the inputs IEI and the output IEO of the device 4, 5, 6 cascade connected. None of these devices can therefore forward interruptions till the device with a higher priority has set again its IEO and INT outputs at level 1, which occurs after the interruption has been served. However, such inhibition mechanism does not prevent completely in the case of several devices forwarding concurrently an interruption to CPU.

However, the propagation speed of the electrical signals in the circuits has a limit.

In each device the time-required by the transition from 1 to 0 at the IEI input to propagate and appear as a transition from 1 to 0 at the IEO output is approximately 200 nsec.

Therefore the masking effect of an interrupting device spreads to the lower priority devices, connected in cascade, with a cumulative delay.

In such time interval it is possible that several devices present at the same time an interruption.

For this reason the CPU has to wait some time before taking into account a pending interruption in order to be sure that such interruption due to one and only one device at each time and that its answer (interruption acceptance) is recognized by the interrupting device only.

When the interrupting device recognizes that an interruption acceptance answer has been sent to it, it puts on the BUS leads an information which specifies, for example, its name or the initial address of an interrupt handling program, or other information used by CPU to get suitable measures.

It is evident that such chain interrupting mechanism, however simple, has the disadvantage to require a certain dead time between the instant on which an interruption is generated and the instant on which it is served.

Such inconvenient is prejudicial to the realization of systems including devices which control fast peripheral units for which the possible interruptions must be served timely.

For instance a system including 16 devices and using the described interruption mechanism, if the propagation time of the inhibition signal from each device is 200 nsec., a time interval of $(16-2)\times200=2800$, about 3 µsec between the instant on which the interruption is generated and the instant on which the interruption is served, is required to pass.

Such delay is not acceptable.

It is also evident that more complex systems, including a greater number of devices, require a longer and less acceptable dead time. The present invention overcomes this limitation by means of a suitable circuital network which has the double action of:

a) acting as speed up of the propagation time of the inhibition signal from the input IEI to output IEO of each device in a way already known in the art, but also:

b) acting as a matrix network interrupting mechanism, as opposed to the chain interrupting mechanism of the prior art, thus reducing the number of steps which the inhibition signal performs for reaching from the output IEO of a generating device the input IEI of the device having the lowest priority.

Figure 2 shows a preferred embodiment of the invention with reference to a system comprising 9 interrupting devices, respectively numbered from 30 to 38. Each device is mounted on a printed circuit board (being the boards numbered from 40 to 48) and each board can include auxiliary circuits, not shown, and interface circuits for coupling with peripheral units or transmission lines.

Each plate is supplied with a connection edge or a plug for insertion in an interconnection socket mounted on the "back panel" of a rack. The connection edge of each board includes a suitable number of input and output pins, which in figure 2 are shown, for clearness sake, as located on different sides of each board.

In detail, with reference to board 40, the connection edge has:

— two input pins 401, 402 for receiving two input enabling/inhibiting signals IEI1, IEI2,.
— an output pin 403 for issuing and output enabling/inhibiting signal IEO,
— an output pin 404 for issuing an interruption signal INT,
— an input/output pin set 405 for the interconnection of device 30 with BUS leads 11.

It is noted that the references of the several pins are formed by adding a cipher to the plate reference number.

As it can be seen from figure 2 all the other plates, from 41 to 48, are identical to plate 40 and are provided with as many identical and functionally equivalent input/output pins as the ones of plate 40. Such pins are therefore identified by numeric references formed by adding to the number of the plate, to which they belong, the reference cipher used for the corresponding pin of plate 40.

Each plate is provided with a network for speeding up the masking operation.

With reference to plate 40, the network includes two AND gates 406, 407, each one with two inputs.

The first AND gate 406 has its output connected to the input IEI of peripheral 30 and its two inputs respectively connected to pins 401, 402 of the board.

The two inputs are normally held at a voltage level +V through two resistors 408, 409 of suitable value, connected between such inputs and a voltage source +V.

The second AND gate 407, of the "open collector" type, has its output connected to pin 403, a first input directly connected to the IEO output of peripheral 30 and the second input connected, through lead 400, to the output of AND gate 406.

Such network is identically repeated on each board.

The interconnections among the several boards are now considered, which form the nub of the present invention. Pin 404 is connected to BUS leaf 12, used for the transfer of the interruption signal (INT).

Pins 405 are connected to the remaining BUS leads 11.

Likewise pins 414, 424 . . . 484 of the several boards are all connected to BUS lead 12 and pins 415, 425 . . . 485 of the several plates are all connected to the other BUS leads.

Such leads or connection elements are formed on the "back panel". Insofar the input pins 401, 411, . . ., 481, 402, 412, . . . 482, and the output pins 403, 413, . . . 483 of each board are concerned, the connections of such pins are made with the following criterion.

The nine peripherals 30, 31, . . . 38 and the corresponding boards 40, 41, . . . 48, to which an interrupting power with decreasing priority from device 30 to device 38 is ascribed, are logically organized in a matrix of 3 rows and 3 columns.

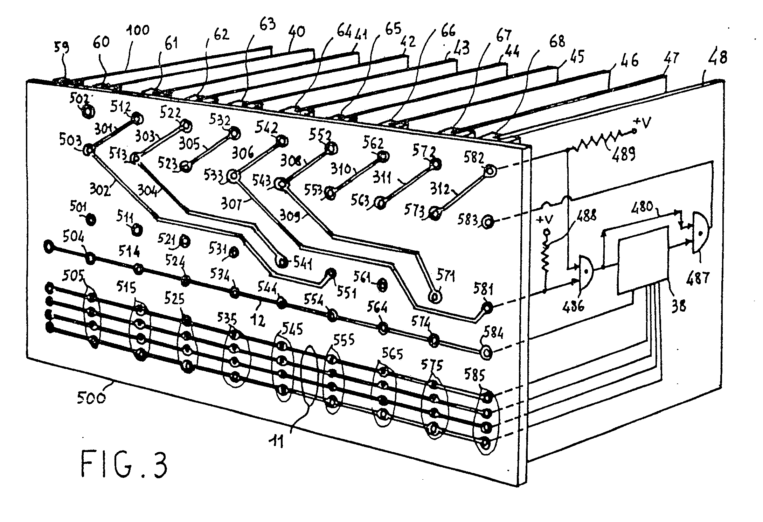

Such logic organization does not necessarily coincide with a topographic arrangement of the same kind: in fact figure 3 shows that the several boards can be arranged in a single pile.

The matrix of fig. 2 includes a first line formed, in the order, by boards 40, 41, 42, a second line formed in the order by boards 45, 44, 43 and a third line formed by boards 46, 47, 48.

The output pin 403 of board 40 is connected through connection 301 to pin 412 of board 41. It is further connected, through connection 302, to pin 451 of board 45.

The output pin 413 of board 41 is connected, through connection 303, to pin 422 of board 42. It is further connected, through connection 304, to pin 441 of board 44.

The output pin 423 of board 42 is connected, through connection 305, to pin 431 of board 43.

The output pin 433 of board 43 is connected, through connection 306, to pin 442 of board 44. It is further connected, through connection 307, to pin 481 of board 48.

The output pin 443 of board 44 is connected through connection 308 to pin 452 of board 45. It is further connected, through connection 309, to pin 471 of board 47.

The output pin 453 of board 45 is connected through connection 310 to pin 461 of board 46.

The output pin 463 of board 46 is connected through connection 311 to pin 472 of board 47.

The output pin 473 of board 47 is connected to pin 482 of board 48 through connection 312.

All these connections are formed on the "back panel".

It is immediate to note that such connections are developed according to a network of rows and columns and provide a path for the interrupt enable/inhibit signal, which extends through the boards both in rows and columns.

Generally a system formed by MxN devices, each one mounted on a board and organized according to a matrix of M ordered rows and N ordered columns may be considered.

The devices and related boards are arranged in the matrix with a decreasing priority by ordered rows and an alternately decreasing/increasing priority by ordered columns within each row.

A matrix interconnection among boards is provided by which the interrupt enable/inhibit signal in output from one board is received by the board, if any, in the same row and having the next lower priority and by the board, if any of the next row and same column.

It is now possible to clearly show how, through the speed-up network arranged on each board and the matrix interconnection system, the interrupt inhibition and masking signal spreads among the boards with masking time which even in worst case is generally lower than the one obtained with the prior art arrangements, having the same number of interconnections.

Still considering figure 2 and particularly plate 40, it can be noted that an interrupt/inhibition signal at logic level 0, possibly applied to input 401, 402, spreads to input IEI of peripheral 30 with a propagation time determined by AND gate 406.

Such time is of about ten nsec, in case the TTL technology, generally adopted for the realization of such circuits, is used.

From here the signal spreads, through connection 400 and AND gate 407, to output 403 with a further delay of about 10 nsec. The total propagation delay of a signal logic level 0 from inputs 401, 402 to output 403 is therefore of 20 nsec.

Lacking such speed up network and supposing that inputs 401, 402 are directly connected to the input IEI of peripheral 30 and the output IEO of the same is directly connected to output 403, the propagation time would be typically in the order of hundreds nsec.

By such an arrangement, a remarkable reduction is therefore obtained in the propagation time of the signal from the input to the output of the board. This consideration is obviously true for all the boards. The whole system of devices is now considered.

The connections between the several boards form a system of devices with decreasing priority from 30 to 38, that is a system of boards with decreasing priority from 40 to 48.

In fact, if device 30 generates an interruption signal, it lowers at the same time its output IEO at logicl level 0 and such level spreads to pin 403 and then, through pin 412 and AND gate 416, to device 31, inhibiting or masking in such last one the possible interrupt requests.

Further, through the speed up network of board 41, the signal spreads to board 42 inhibiting or masking device 32, and so on up to board 48.

It is however to be noted that, if device 30 generates an inhibit signal to IEO output, such signal is transferred, in addition to device 31 of the same row, to device 35 of the same column, through connections 302 as well as, through the speed up network of board 45, to device 36 of the same column too.

Thus the inhibit/interrupt signal spreads through devices in cascade, not only according to a row order, but according to a column order too and this is obviously valid for all the devices of the system.

It is immediate to conclude that with such connection system the worst case propagation time of an inhibit signal from the highest priority board to the one with lowest priority is given by:

$$Tp = \Delta \times (M + N - 3)$$

with
$\Delta$ = propagation time of a board
M = number of rows
N = number of columns

With reference to figure 2, such time is therefore:

$$Tp = \Delta \times (3 + 3 - 3) = 3 \times \Delta$$

In case of simple series connections of the boards (and corresponding peripherals) it would be:

$$Tp = \Delta \times (M \times n - 2) = \Delta \times (3 \times 3 - 2) = 7 \times \Delta$$

The propagation time reduction becomes still more relevant in systems of more lines and columns.

For instance, in a system formed by 25 devices, arranged in a 5 rows and 5 columns matrix, the worst propagation time is:

$$Tp = 7\Delta$$

whilst in case of simple series connection the time would be:

$$Tp = 23\Delta$$

The propagation time is therefore reduced almost to a third. Similar comparisons can be made with other prior art embodiments. Considering again figure 2, other important aspects of the described embodiment of the invention may be evidenced.

First of all it is to be noted that some inputs, such as 401, 402, 411 of boards 40, 41, 42, are not used and the speed-up networks of such boards could therefore be simplified with a saving in electronic components.

It is however preferable that the boards have identical speed up networks because it allows their complete position interchangeability within the matrix.

In this way it is possible to change, according to the user needs, the relative priority among the several devices.

A second important remark is that in figure 2 a central unit CPU 1, which controls the system of devices, is shown as an element which is not included in the device matrix.

It is however clear that if CPU 1 is mounted on a board identical as to size and connection pins to the device boards, the CPU too can be located in the matrix in place of the higher priority device (device 30 in fig. 2).

In addition it will be possible to place the CPU anywhere in the matrix in place of any device with lower priority, provided the board contains a speed up network like the one already seen. In such case the network function is only to establish a connection between two input pins of the plate and an output pin with obvious simplification.

The same consideration are true for any possible memory module. A third important remark is that a system of devices need not to be complete, in the sense that, once provided a mechanical architecture and a "back panel" circuit arranged to fit with a MxN board number, it is not required that the system actually includes MxN boards; on the contrary it can include a lower number of them.

Figure 3 shows, in perspective, the mechanical architecture according to which the system of figure 2 is preferably embodied.

A printed circuit plate which, according to the needs, may be single, double or multilayer provides a back panel 500.

Ten connection sockets 59, 60, ... 68, are mounted on board 500, for instance by soldering in parallel stacked fashion, each one being intended to receive the edge of a printed circuit board where the connection pins are located.

Board 100, containing CPU 1, is inserted into socket 59, board 40 into socket 60, board 41 into socket 61 and so on up to board 48 which is inserted into socket 68.

The socket conducting elements (not in sight) are soldered to as many back panel pads and establish an electrical connection between the pins of the boards 100, 40, ... 48 and the pads.

In detail the pins referenced in figure 2 by 4ij (i=0, 1 ... 8; j=1, 2 ... 5) are connected with pads referenced in figure 3 by 5ij (i=0, 1 ... 8; j=1, 2 ... 5).

Back panel 500 bears in sight the several printed leads which form BUS 11, the interrupt lead 12, and the priority network leads already numbered from 301 to 312 in figure 2.

BUS 11 and lead 12 extend to socket 59 and set an electrical connection with the CPU board 100.

With such "back panel" it is possible to set up systems containing in addition to the central unit CPU1 a maximum of 9 devices. In case of systems including less than 9 devices, the only requirement for functionality of the priority network is the ordered arrangement of the system boards in the first interconnection sockets, from socket 59.

The relative arrangement of the boards among themselves determines the priority of the devices mounted on each board.

It is clear that the relative priority can be modified according to the needs, by simply changing the position of the board.

In the previous description reference has been made to systems where each board includes one device only.

However the priority awarding and the interrupt masking matrix system, which is the object of the present invention, can be used in EDP systems where a plurality of devices is mounted on a single board. In such case some interconnection leads, indicated in figures 2 and 3 as formed on the "back panel", can be directly made on the device boards.

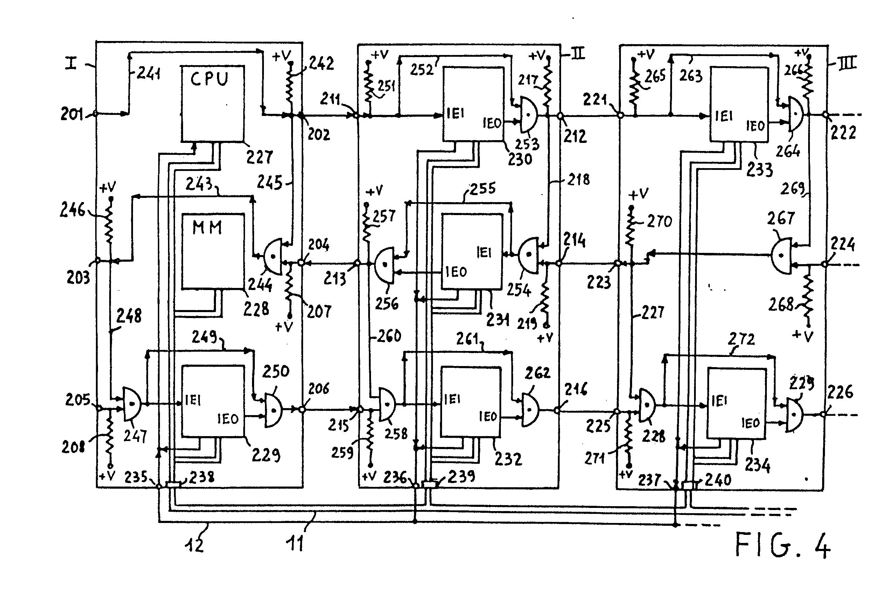

Figure 4 shows such embodiment.

In figure 4, 3 printed circuit boards I, II, III are shown. Board I includes a central unit CPU 227, a memory unit MM 228 and a device 229.

Board II includes three devices 230, 231, 232 and board III includes two devices 233, 234.

With such example it is therefore pointed out that the boards can include a variable number of devices, as well as logic units other than devices, which do not intervene in the interruption generation a masking process, such as the central unit and the memory. To allow for the most complete position interchangeability among the boards, they are provided with the same number of input and output pins, identically located.

Thus each plate has a pin, respectively 235, 236, 237 for connection to BUS lead 12, dedicated to the transfer of the interrupt signal, a pin set, respectively 238, 239, 240, for the interconnection of the several devices and of the memory units or CPU with BUS leads 11, and a plurality of input pins, respectively 201, 204, 205 for plate I, 211, 214, 215 for plate II, 221, 224, 225 for plate III, intended to receive input IEI enable/inhibit signals, as well as a plurality of output pins, respectively 202, 203, 206 for plate I, 212, 213, 216 for plate II and 222, 223, 226 for plate III, intended to transfer output IEO enable/inhibit signals.

Such input and output pins for the transfer of signals IEI, IEO are suitably connected among themselves in order to form a matrix network for interruption transfer and masking.

Pins 201 and 202 are related to CPU 227 but, since CPU does not intervene in the interruption generation and masking mechanism, such pins are not interconnected with the CPU and are directly connected together through lead 241.

They are normally held at a positive level through a "pull-up" resistor 242.

Pins 203 and 204 are related to memory 228 but, since the memory does not operate in the interruption generation and masking mechanism, such pins are not interconnected with memory and are connected together by a lead 243 and through the two input AND gate 244 of the "open collector" type.

An input of AND gate 244 is connected to pin 204; the second input is connected to pin 202 through lead 245.

Pins 203 and 204 are normally held at positive level through "pull-up" resistors 246 and 207 respectively.

Pins 205 and 206 are coupled to device 229. Pin 205 is connected to an input of a two inputs AND gate 247 and it is normally held at positive level by a "pull-up" resistor 208.

The second input of AND gate 247 is connected to pin 203 through lead 248.

The output of AND gate 247 is connected to input IEI of device 229. It is further connected to an input of a two input AND gate 250, of the open collector type, through a "by-pass" lead 249.

The second input of gate 250 is connected to output IEO of device 229.

The output of AND gate 250 is connected to pin 206. Considering plate II, pins 211 and 212 are coupled to device 230. Pin 211 is connected to input IEI of peripheral 230 and, through a "by-pass" lead 252 to an input of a two input AND gate 253, of the "open collector" type.

Further it is normally held at a positive level by a "pull-up" resistor 251.

The second input of AND gate 253 is connected to output IEO of device 230.

The output of AND gate 253 is connected to pin 212 and is normally held at positive level by "pull-up" resistor 217.

Pin 213 and 214 are coupled to device 231.

Pin 214 is connected to an input of a two inputs AND gate 254 and it is normally held at positive level by "pull-up" resistor 219.

The second input of AND 254 is connected to output of AND gate 253 through lead 218.

The output of AND gate 254 is connected to input IEI of device 231 and through lead 255 to an input of a two input AND gate 250 of the "open collector" type.

The second input of such AND is connected to output IEO of device 231.

The output is connected to pin 213 and it is normally held at positive level by a "pull-up" resistor 257.

Pins 215 and 216 are coupled to device 232.

Pin 215 is connected to an input of a two input AND gate 258 and it is normally held at positive level by the "pull-up" resistor 259. The second input of AND gate 258 is connected to pin 213 through lead 260.

The AND gate 258 output is connected to IEI input of device 232 and through lead 261 to an input of a two input open collector AND gate 262.

The second input of AND gate 262 is connected to output IEO of device 232 and its output is connected to pin 216.

Considering board III it can be noted that pins 221 and 222 are coupled to device 233.

Pin 221 is connected to input IEI of device 233 and, through lead 263, to an input of a two input "open collector" AND gate 264.

Further, it is normally held at positive level by a "pull-up" resistor 265.

The second input of AND gate 264 is connected to output IEO of device 233 and its output is connected to tap 222 and normally held at positive level by "pull-up" resistor 266.

Pins 223 and 224 are not coupled to any device and are located on the board only to assure the identity among the several board as concerns the input and output terminals and therefore their position interchangeability within the system architecture.

Pins 223 and 224 are interconnected each other by circuits which complete the network architecture of the circuits and of the interrupt and masking mechanism.

Pin 224 is connected to an input of a two input "open collector" AND gate 267.

Further it is held at positive level by "pull-up" resistor 268. The second input of AND gate 267 is connected to pin 222 through lead 269.

The AND gate 267 output is connected to pin 223 and it is normally held at positive level by the "pull-up" resistor 270. Pins 225 and 226 are coupled to device 234.

Pin 225 is connected to an input of a two input AND gate 228 and it is normally held at positive level by "pull-up" resistor 271. The second input of AND gate 228 is connected to pin 223 through lead 227.

The AND gate 228 output is connected to input IEI of device 234 and, through lead 272, to an input of a two input "open collector" AND gate 229.

The second input of AND gate 229 is connected to output IEO of device 234 and its output is connected to pin 226.

The several boards are interconnected each other through the leads of a back panel. Particularly the couples of pins 202 and 211, 204 and 213, 206 and 215, 212 and 221, 214 and 213, 216 and 225 are connected each other.

The system architecture can be extended indefinitely by connecting pins 222, 224, 226 to corresponding pins of a fourth board and so on.

Figure 5 shows the "back panel" 273 of a system formed with boards like the ones of figure 4.

The reference number which appear in such figure are referred to the pins of the several boards which are connected through sockets, not shown, on the back panel.

In figures 4 and 5 too it is easy to notice that a processing system is obtained, where the several devices are interconnected by an interrupt transfer and masking network, of the matrix type, which assigns a precise priority to the several devices according to the relative position of the boards and the position of the devices within the boards.

By changing the order of the boards it is possible to modify the relative priority both for groups of devices and for each single peripheral.

The spread of the interruption masking signals occurs for rows and for columns of a matrix and through "by-pass" circuits of each peripheral which reduce in a high measure the signal propagation times. It is to be noted that in the figures reference is made to by pass network realized with AND type logic element only for explanation purposes, in connection with the enabling logic level 1 which has been considered.

In fact it is clear that the use of different enabling levels for the two signals emitted by IEO outputs or received by IEI inputs causes obvious circuital modifications, easy to be deduced from the binary logic, so that different logical elements can be used in replacement of the AND logical elements such as, for instance, the OR logical gates.

### Claim

1. A data processing system comprising a central data processor (1) coupled over a common bus (11) with a plurality of devices (30 to 38), whereby each device may access the bus by means of an interrupt signal forwarded to the central data processor through an interrupt line (12), and whereby the devices are ordered in a configuration with decreasing priority, and whereby a device which accesses the bus by means of an interrupt signal available on a first output (404, 414, etc) generates at the same time an inhibit/enable signal on a second output (IEO), which signal prevents devices having lower priority to emit the interrupt signal, and whereby the propagation network for an inhibit/enable signal for each device consists of first gate means (406, 416, etc) the output of which being connected to the inhibit/enable input (IEI) of the device; a bypass network (400, 410, etc) connected to the output of the first gate means and connected to an input of second gate means (407, 417, etc). for combining said inhibit/enable signal on the IEI input with said inhibit/enable signal on said second output IEO of the device; and whereby the output of the second gate means of a device is connected to an input of the first gate means of the device having the next lower priority and may be connected to an input of the first gate means of a device having a still lower priority, characterized in that the devices are ordered in a M×N matrix configuration with M rows and N columns, the devices being ordered in decreasing priority by row and alternately in decreasing/increasing priority by column, within subsequent rows, and in that the interconnection of the output of the second gate means of a device to an input of the first gate means of a device having a still lower priority only exists in those cases that both devices are located in the same column of two subsequent rows.

### Revendication

Système de traitement de données, comportant un processeur central (1) couplé, via un bus commun (11), à une pluralité de dispositifs (30 à 38) qui peuvent accéder chacun au bus au moyen d'un signal d'interruption acheminé jusqu'au processeur central par une ligne d'interruption (12), ces dispositifs étant ordonnés en une configuration à priorité décroissante, un dispositif accédant au bus au moyen d'un signal d'interruption disponible sur une première sortie (404, 414, etc), générant en même temps, sur une deuxième sortie (IEO) un signal d'inhibition/validation qui empêche les dispositifs ayant une moindre priorité d'émettre le signal d'interruption, le réseau de propagation d'un signal d'inhibition/validation pour chaque dispositif consistant en des premiers moyens du genre porte (406, 416, etc.) dont la sortie est reliée à l'entrée d'inhibition/validation (IEI) du dispositif, et en un réseau de contournement (400, 410, etc.) relié à la sortie des premiers moyens du genre porte et relié à une entrée de deuxièmes moyens du genre porte (407, 417, etc.), pour combiner ledit signal d'inhibition/validation présent à l'entrée IEI audit signal d'inhibition/validation présent à ladite deuxième sortie IEO du dispositif; et la sortie des deuxièmes moyens du genre porte d'un dispositif étant reliée à une entrée des premiers moyens du genre porte du dispositif dotés de la priorité immédiatement inférieure, et pouvant être reliée à une entrée des premiers moyens du genre porte d'un dispositif ayant une priorité encore plus basse, caractérisé en ce que les dispositifs sont ordonnés en une configuration en matrice de M×N, comportant M lignes et N colonnes, les dispositifs étant ordonnés en priorité décroissante par rangée, et priorité tour à tour décroissante puis croissante par colonne, au sein de lignes subséquentes, et en ce que l'interconnexion entre la sortie des deuxièmes moyens du genre porte d'un dispositif et une entrée des premiers moyens du genre porte d'un dispositif ayant une priorité encore plus basse n'existe que dans les cas où les deux dispositifs sont situés dans la même colonne de deux lignes subséquentes.

### Patentanspruch

Datenverarbeitungssystem mit einem zentralen Datenprozessor (1), der über eine gemeinsame Sammelschiene (11) mit mehreren Geräten (30 bis 38) in Verbindung steht und wobei jedes Gerät durch ein dem zentralen Datenprozessor über eine Unterbrechungsleitung (12) zugeführtes Unterbrechungssignal Zugriff zur Sammelschiene erlangen kann; die Geräte in einer Konfiguration mit abnehmender Priorität geordnet sind; ein Gerät, welches durch ein an einem ersten Ausgang (404, 414 usw.) anstehendes Unterbrechungssignal Zugriff zur Sammelschiene hat, gleichzeitig an einem zweiten Ausgang (IEO) ein Sperr-/Entsperrsignal erzeugt, welches die Geräte mit niedrigerer Priorität am Aussenden von Unterbrechnungssignalen hindert; das Ausbreitungsnetzwerk für ein Sperr-/Entsperrsignal in jedem Gerät aus einem ersten Gatter (406, 416, usw.) besteht, dessen Ausgang an den Sperr-/Entsperreingang (IEI) des Gerätes angeschlossen ist; ein Bypassnetzwerk (400, 410, usw.) an den Ausgang des ersten Gatters und den einen Eingang eines zweiten Gatters (407, 417, usw.) angeschlossen ist, um die Sperr-/Entsperrsignale am Eingang (IEI) mit denjenigen am zweiten Ausgang (IEO) des Gerätes zu kombinieren; der Ausgang des zweiten Gatters eines Gerätes an einen Eingang des ersten Gatters desjenigen Gerätes mit der nächstniedrigeren Priorität angeschlossen ist und ferner an einen Eingang des ersten Gatters eines Gerätes mit noch niedrigerer Priorität angeschlossen sein kann, dadurch gekennzeichnet, daß die Geräte in einer M×N—Matrixkonfiguration mit M Zeilen und N Spalten angeordnet sind; die Geräte von Zeile zu Zeile geringere Priorität haben und innerhalb aufeinanderfolgender Zeilen abwechselnd jeweils nach fallender bzw. nach steigender Priorität spaltenweise geordnet sind; der Anschluß des Ausgangs des zweiten Gatters eines Gerätes an der Eingang des ersten Gatters eines eine noch niedrigere Priorität aufweisenden Gerätes nur bei denjenigen Geräten vorgesehen ist, die in der gleichen Spalte zweier aufeinanderfolgender Zeilen angeordnet sind.

FIG. 1

FIG. 5

0 024 663

FIG.2

FIG.3

0 024 663

3

FIG. 4

0 024 663